# EUROPÄISCHE PATENTSCHRIFT

(11) **EP 1 400 270 B1**
(45) Veröffentlichungstag und Bekanntmachung des Hinweises auf die Patenterteilung: **25.07.2007**
(21) Anmeldenummer: 03020562.9
(22) Anmeldetag: 17.09.2003
(51) Int. Cl.: B01D 35/30, B01D 29/96

(54) **Flüssigkeitsfilter, insbesondere Ölfilter für Kraftfahrzeuge**
Liquid filter, especially lubricant oil filter for automotive vehicles
Filtre à liquide, en particulier filtre à huile pour véhicules automobiles

(30) Priorität: 20.09.2002 DE 10243738
(43) Veröffentlichungstag der Anmeldung: 24.03.2004
(73) Patentinhaber: Mann + Hummel GmbH, 71638 Ludwigsburg (DE)
(72) Erfinder: Jainek, Herbert, 74074 Heilbronn (DE)
(74) Vertreter: Voth, Gerhard

(56) Entgegenhaltungen:
- EP-A- 0 269 054
- EP-A- 1 321 637
- DE-A- 3 732 341

## Beschreibung

Die Erfindung bezieht sich auf einen Flüssigkeitsfilter, insbesondere einen Ölfilter für Kraftfahrzeuge, nach dem Oberbegriff des Anspruches 1; ein derartiger Filter ist aus der EP-A-0269054 bekannt.

Ein für die Reinigung von Getriebeöl in Automatikgetrieben von Kraftfahrzeugen eingesetzter Ölfilter wird beispielsweise in der Druckschrift DE 201 09 917 U1 beschrieben. Der Filter umfasst ein zweigeteiltes Filtergehäuse, bestehend aus einer Gehäuseunterschale und einer Gehäuseoberschale, die in Zusammenbauposition einen Filterinnenraum begrenzen, in welchen ein Filterelement eingesetzt ist. Über einen Einlassstutzen in der Gehäusewandung wird dem Filter verunreinigtes Getriebeöl zugeführt, das beim Passieren des Filterelementes gereinigt und anschließend über einen Auslassstutzen wieder abgeführt wird.

Derartige Ölfilter werden auch für die Reinigung von Schmieröl in Brennkraftmaschinen zur Versorgung von Schmierstellen im Zylinderkopf und Lager verwendet. Der Ölfilter ist an den Motorblock angeflanscht, wobei über eine Ölpumpe der zum Passieren des Filterelementes erforderliche Hydraulikdruck erzeugt wird. Zum Wechsel des Filterelementes muss der Filterdeckel vom Filtergehäuse gelöst werden. Aufgrund der beengten Platzverhältnisse im Motorraum gestaltet sich die Wartung mühsam und schwierig.

Der Erfindung liegt das Problem zugrunde, einen Flüssigkeitsfilter zu schaffen, der sich durch eine hohe Wartungsfreundlichkeit bei zugleich einfachem Aufbau auszeichnet.

Dieses Problem wird erfindungsgemäß mit den Merkmalen des Anspruches 1 gelöst. Die Unteransprüche geben zweckmäßige Weiterbildungen an.

Das Filtergehäuse des erfindungsgemäßen Flüssigkeitsfilters besteht aus einem Filtersockel, der zur Befestigung an einem weiteren Bauteil wie zum Beispiel einem Motorblock dient, sowie einer Filteraufnahme, in der das Filterelement zur Reinigung der Flüssigkeit aufgenommen ist. Die Filteraufnahme ist an dem Filtersockel gehalten, ist jedoch separat vom Filtersockel ausgebildet und kann relativ zum Filtersockel zwischen einer Funktionsposition, in welcher Flüssigkeit gereinigt werden kann, und einer Wartungsposition verstellt werden, in welcher das Filterelement in der Filteraufnahme von außen zugänglich ist und ausgetauscht werden kann. Die Wartungsfreundlichkeit wird hierdurch erheblich verbessert.

Auf Grund der Verstellbarkeit der Filteraufnahme gegenüber dem Filtersockel kann der Flüssigkeitsfilter auch an unzugänglichen Orten platziert werden, beispielsweise an einem Motorblock unterhalb des Saugrohres, das zur Versorgung der Zylinder mit Verbrennungsluft dient, und kann dennoch für Wartungsarbeiten allein über die Relativverstellung der Filteraufnahme gegenüber dem Sockel in eine Position verstellt werden, in welcher das Filterelement von außen zugänglich ist, ohne dass hierfür der Sockel von dem tragenden Bauteil gelöst werden müsste. So ist es insbesondere möglich, den Flüssigkeitsfilter als Ölfilter für die Reinigung von Getriebeöl oder Schmieröl in Kraftfahrzeugen auszubilden und an den Motorblock anzuflanschen.

Da aus Gründen der Crashsicherheit im Motorraum des Kraftfahrzeuges zwischen vorne liegendem Kühler und der Brennkraftmaschine ein freier, unverbauter Crashraum freigehalten werden muss, ist eine klein bauende Anordnung der Brennkraftmaschine einschließlich der ihr zugeordneten Aggregate erforderlich. Diesem Erfordernis kann mit Blick auf den zweiteiligen Ölfilter insoweit Rechnung getragen werden, als in der Funktionsposition Filtersockel und Filteraufnahme eine kompakte Baueinheit bilden und außerhalb des bauteilfreien Crashbereiches liegen, für Wartungszwecke dagegen - bei Stillstand des Fahrzeugs - die Filteraufnahme in den Crashbereich hinein verstellt werden kann, was den Vorteil einer guten Zugänglichkeit zum Filterelement in der Filteraufnahme bietet.

In einer vorteilhaften Ausführung ist vorgesehen, dass die Zuströmöffnung, zweckmäßig auch die Abströmöffnung im Filtersockel liegen und diese Öffnungen mit einem Zuströmkanal bzw. einem Abströmkanal in der Filteraufnahme in Funktionsposition kommunizieren. Die Zufuhr, zweckmäßig auch die Ableitung der zu reinigenden Flüssigkeit erfolgt in Funktionsposition über den Filtersockel, der diese Funktionen zusätzlich zu seiner die Filteraufnahme tragenden und diese mit einem weiteren Bauteil verbindenden Funktion übernimmt.

Im Filtergehäuse kann eine Ablassöffnung vorgesehen sein, über die die zu reinigende Flüssigkeit für Wartungszwecke aus dem Flüssigkeitsfilter abgeleitet werden kann. Diese Ablassöffnung wird zweckmäßig in Abhängigkeit der aktuellen Position der Filteraufnahme geöffnet bzw. gesperrt. In Wartungsposition ist die Ablassöffnung geöffnet, so dass die Flüssigkeit aus dem Flüssigkeitsfilter über die Ablassöffnung abgeleitet werden kann. In Funktionsposition ist die Ablassöffnung dagegen versperrt und die gereinigte Flüssigkeit wird über den Abströmkanal aus dem Flüssigkeitsfilter abgeleitet. In der Wartungsposition kommuniziert die Ablassöffnung vorteilhaft mit dem Abströmkanal, um sicherzustellen, dass auch die im Abströmkanal verbliebene Flüssigkeit weitestgehend aus dem Flüssigkeitsfilter entfernt werden kann.

Um zu gewährleisten, dass der Motor nicht versehentlich mit gelöster Filteraufnahme - Filteraufnahme in Wartungsposition - gestartet wird, kann ein Drucksensor zur Messung des Drucks im Abströmkanal vorgesehen sein, wobei ein Fehlersignal für den Fall erzeugt wird, dass der Druck im Abströmkanal einen Grenzwert unterschreitet. Bei geöffneter Filteraufnahme kann im Abströmkanal kein Druck aufgebaut werden, was über die Druckabfrage erkannt und dem Fahrer über ein Fehlersignal zur Anzeige gebracht werden kann. Das Fehlersignal kann gegebenenfalls auch unmittelbar auf die Motorelektronik einwirken und beispielsweise einen Start des Motors verhindern.

Die Verstellung der Filteraufnahme relativ zum Filtersockel erfolgt vorteilhaft mit Hilfe eines Stellgliedes, welches in das Filtergehäuse integriert ist. Dieses Stellglied ist zweckmäßig manuell zu betätigen und beispielsweise als Stellschraube ausgeführt, insbesondere als Flügelschraube, die von der Wartungsperson manuell geöffnet und wieder zugezogen werden kann. Die Stellschraube ist zweckmäßig axial unverrückbar mit der Filteraufnahme verbunden und greift mit ihrem Schaft in ein zugeordnetes Gewinde im Filtersockel ein, so dass bei einem Aufdrehen der Stellschraube die -Filteraufnahme sich axial vom Filtersockel bis zum Erreichen der Wartungsposition entfernt. Beim Zuziehen der Stellschraube wird in Umkehrung des Vorganges die Filteraufnahme wieder axial bis zum Erreichen der Funktionsposition an den Filtersockel angenähert.

Des Weiteren kann vorgesehen sein, dass das Stellglied auch zum Versperren bzw. Freigeben der Ablassöffnung herangezogen wird, indem das Stellglied in Funktionsposition des Filters in die Ablassöffnung einragt und dadurch diese versperrt und in Wartungsposition freigibt.

Als Relativbewegung führt die Filteraufnahme vorteilhaft eine rein translatorische Verschiebung gegenüber dem Filtersockel aus. Darüber hinaus kommen aber auch Drehbewegungen bzw. Kombinationen von Verschiebe- und Drehbewegungen in Betracht. Eine translatorische Verschiebebewegung lässt sich in einfacher Weise dadurch realisieren, dass die gesamte Filteraufnahme in eine Öffnung im Filtersockel einsteckbar bzw. einzuschieben ist. Die Relativbewegung wird mit Hilfe des Stellgliedes ausgeführt. Alternativ hierzu kann es aber auch zweckmäßig sein, die Relativbewegung beispielsweise über Führungskulissen zu steuern.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer Brennkraftmaschine in einem Kraftfahrzeug mit einem zugeordneten Ölfilter,
- Fig. 2: der Ölfilter in einer vergrößerten Darstellung in Seitenansicht,
- Fig. 3: einen Schnitt durch den Ölfilter.

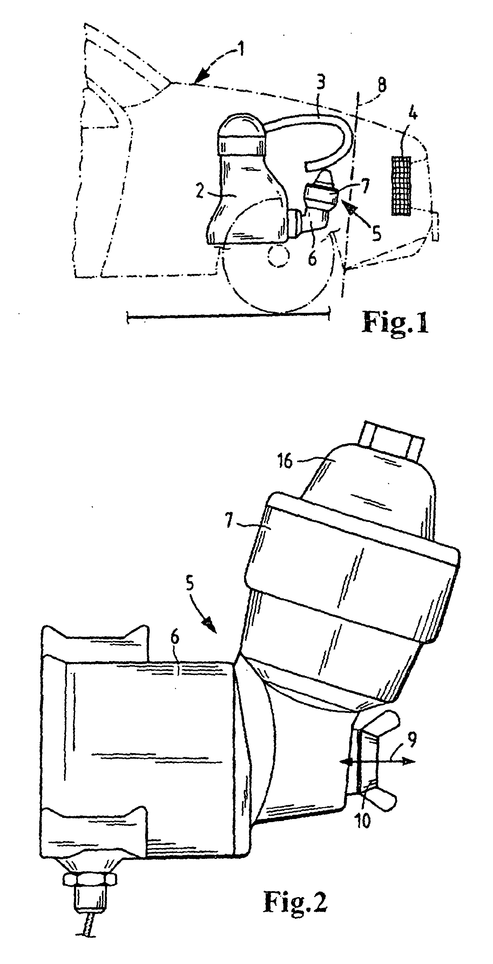

Das in Fig. 1 dargestellte Kraftfahrzeug 1 weist in seinem Motorraum eine Brennkraftmaschine 2 auf, deren Zylinder über ein Saugrohr 3 mit Verbrennungsluft versorgt werden. Im Frontbereich der Motorhaube ist ein Kühler 4 angeordnet. Des Weiteren ist ein Ölfilter 5 vorgesehen, der an den Motorblock der Brennkraftmaschine 2 angeflanscht ist und über den Schmieröl zu reinigen ist, welches in den Zylinderkopf bzw. in Lager der Brennkraftmaschine geleitet wird. Der Ölfilter 5 ist zweiteilig aufgebaut und besteht aus einem Filtersockel 6, der mit dem Motorblock verbunden ist, sowie einer Filteraufnahme 7, die das Filterelement enthält und auf dem Filtersockel 6 aufsitzt. Die Filteraufnahme 7 ist relativ zum Filtersockel 6 verschieblich ausgeführt und kann zwischen der dargestellten Funktionsposition und einer Wartungsposition verstellt werden, in welcher die Filteraufnahme 7 gegenüber dem Filtersockel 6 in Fahrzeuglängsrichtung nach vorne verschoben ist und in der das Filterelement in der Filteraufnahme von außen zugänglich ist und ausgetauscht werden kann.

Aus Gründen der Crashsicherheit ist im Motorraum eine bauteilfreie Zone vorgesehen, welche sich zwischen dem vorderen Kühler und einer Crashebene 8 erstreckt, die näherungsweise vertikal verläuft und die der Brennkraftmaschine 2 zugeordneten Aggregate - insbesondere Saugrohr 3 und Ölfilter 5 - nach vorne begrenzt. Diese bauteilfreie Zone soll aus Gründen einer besseren Verformbarkeit des Motorraumes freigehalten werden.

In der Funktionsposition des Ölfilters 5 liegen sowohl der Filtersockel 6 als auch die Filteraufnahme 7 in Fahrzeuglängsrichtung gesehen hinter der Crashebene 8. Für Wartungszwecke kann die Filteraufnahme 7 nach vorne verschoben werden und hierbei die Crashebene 8 überschreiten und in den Crashbereich einragen. Nach Ausführung der Wartungsarbeiten wird die Filteraufnahme 7 wieder in ihre Funktionsposition zurückgeschoben, der Crashbereich ist dann wieder frei von Bauteilen.

Die axiale Verstellbarkeit der Filteraufnahme 7 relativ zum Filtersockel 6 des Ölfilters 5 ist in Fig. 2 mit dem Pfeil 9 dargestellt. Zum Erreichen der Wartungsposition wird die Filteraufnahme 7 vom Filtersockel 6 wegbewegt, für die Funktionsposition wird die Filteraufnahme 7 wieder dem Filtersockel 6 angenähert. Die Verstellung gemäß Pfeilrichtung 9 wird mit Hilfe einer Stellschraube 10 durchgeführt, die ein Stellglied für die Überführung der Filteraufnahme 7 zwischen Funktions- und Wartungsposition bildet und insbesondere als Flügelschraube ausgeführt ist, welche manuell von außen ohne Weiteres zu betätigen ist. Das in der Filteraufnahme 7 aufgenommene Filterelement ist zu Wartungszwecken durch Aufschrauben eines Schraubdeckels 16 aus der Filteraufnahme zu entnehmen.

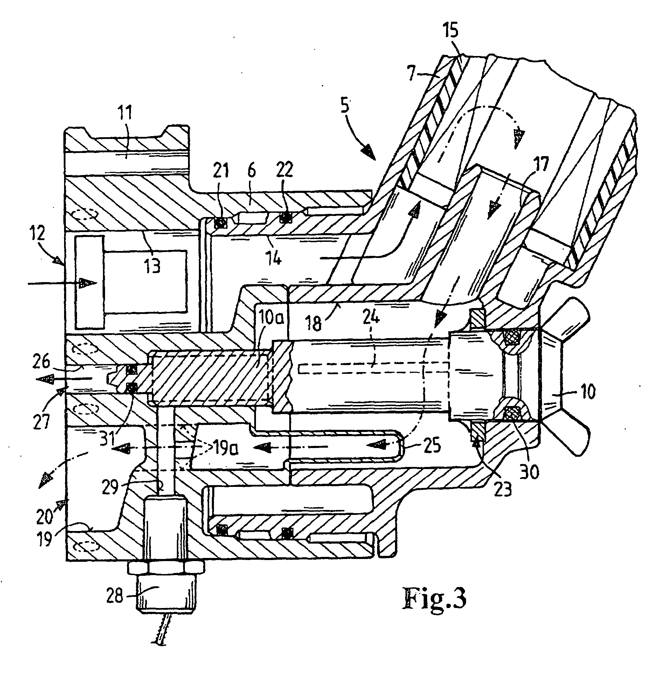

In Fig. 3 ist der Ölfilter 5 im Detail dargestellt. Der Filtersockel 6 ist über Befestigungsbohrungen 11 an einem weiteren Bauteil - im Ausführungsbeispiel am Motorblock der Brennkraftmaschine - zu befestigen. In Befestigungsposition wird dem Filtersockel 6 ungereinigtes Rohöl über eine Zuströmöffnung 12 zugeführt, die einen Kanalabschnitt 13 im Filtersockel begrenzt, der in Funktionsposition der Filteraufnahme 7 in einen Zuströmkanal 14 in der Filteraufnahme übergeht. Kanalabschnitt 13 im Filtersockel 6 und Zuströmkanal 14 in der Filteraufnahme 7 verlaufen zunächst koaxial, wobei der Zuströmkanal 14 im weiteren Verlauf einen Knick erfährt und um etwa 60° umgelenkt wird und auf das Filterelement 15 trifft. Das Filterelement 15 ist hohlzylindrisch ausgebildet, wobei der Innenraum des Filterelementes die Reinseite bildet, über den das gereinigte Öl axial über einen Stutzen 17 in der Filteraufnahme 7 zurückgeführt wird.

Der Stutzen 17 mündet in einen axialen Abströmkanal 18, welcher zentrisch in der Filteraufnahme 7 ausgebildet ist. Der Abströmkanal 18 ist in Funktionsposition über einen Durchgang 19a (gestrichelt dargestellt) mit einem Kanalabschnitt 19 im Filtersockel 6 verbunden und kann den Ölfilter über eine Abströmöffnung 20 verlassen, über die das gereinigte Öl wieder in den Block geleitet und zu den Schmierstellen geführt wird.

Der axiale Abschnitt der Filteraufnahme 7 bildet einen Stutzen, welcher in eine zugeordnete Öffnung im Filtersockel 6 einragt. Auf der Umfangsseite sind zwischen Filtersockel 6 und Filteraufnahme 7 zwei axial beabstandete O-Ringe 21 und 22 angeordnet, die in umlaufenden Nuten auf der Außenseite der Filteraufnahme eingesetzt sind und eine flüssigkeits- und druckdichte Verbindung zwischen Filtersockel 6 und Filteraufnahme 7 sicherstellen, wodurch Fehlströme vermieden werden.

Zentrisch in der Filteraufnahme 7 ist die Stellschraube 10 angeordnet, welche die Filteraufnahme 7 mit dem Filtersockel 6 verbindet. Die Stellschraube 10 ist über einen Krallring 23 axial unverschiebbar an der Filteraufnahme 7 gehalten, kann jedoch relativ zur Filteraufnahme 7 verdreht werden. Der Schraubenschaft 10a der Stellschraube 10 ist in ein Innengewinde im Filtersockel 6 eingeschraubt. Bei einer Verdrehung der Stellschraube 10 wird die Filteraufnahme 7 zum Erreichen der Wartungsposition gemeinsam mit der Stellschraube 10 axial nach außen verschoben. Die Drehbewegung der Stellschraube 10 kann hierbei über einander zugeordnete Anschläge 24 und 25 auf der Mantelfläche der Stellschraube bzw. im Filtersockel 6 begrenzt werden, um zu verhindern, dass die Filteraufnahme 7 versehentlich völlig aus dem Filtersockel 6 herausgelöst wird.

In der Funktionsposition ragt der Schraubenschaft 10a der Stellschraube 10 in einen Kanalabschnitt 26 ein und versperrt diesen, welcher über eine Ablassöffnung 27 zu einer Ölwanne führt. In Wartungsposition ist der Kanalabschnitt 26 mit dem Abströmkanal 18 verbunden, so dass das im Ölfilter befindliche Öl über den Kanalabschnitt 26 und die Ablassöffnung 27 in die Ölwanne zurückströmen kann und der Rückstrom über die Abströmöffnung 20 unterbrochen ist. Auf diese Weise wird beim Überführen der Filteraufnahme 7 in die Wartungsposition automatisch auch das im Ölfilter befindliche Öl abgelassen.

Um sicherzustellen, dass die Brennkraftmaschine erst gestartet wird, wenn die Filteraufnahme 7 sich in Funktionsposition befindet, kann mit Hilfe eines Drucksensors 28 der Druck im Abströmkanal 18 überwacht werden, wobei für den Fall, dass der Druck im Abströmkanal einen vorgegebenen Grenzdruck unterschreitet, ein Fehlersignal erzeugt wird, welches entweder dem Fahrer zur Anzeige gebracht wird oder der Motorelektronik zugeleitet wird, die daraufhin einen Start des Motors verhindert. Der Drucksensor 28 misst den Druck in einem Kommunikationskanal 29, welcher im Filtersockel 6 ausgebildet ist und radial zum Kanalabschnitt 19 sowie dem Kanalabschnitt 26 führt und mit diesen kommuniziert. Der Kanalabschnitt 19 ist über den Durchgang 19a mit dem Abströmkanal 18 in der Filteraufnahme 7 verbunden, der Kanalabschnitt 26 dient zum Ablassen des Öls über die Ablassöffnung 27 bei geöffneter Filteraufnahme 7.

Die Stellschraube 10 ist über einen ersten O-Ring 30 druck- und flüssigkeitsdicht gegenüber dem Abströmkanal 18 abgedichtet, wobei sich der O-Ring 30 in der Filteraufnahme 7 benachbart zu den Flügeln der Stellschraube 10 befindet. Ein zweiter O-Ring 31 befindet sich axial gegenüberliegend im Bereich der Stirnseite der Stellschraube 10 und dichtet in Funktionsposition den Kanalabschnitt 26 gegenüber dem Abströmkanal 18 ab.

## Patentansprüche

1. Flüssigkeitsfilter, insbesondere Ölfilter für Kraftfahrzeuge, mit einem zweiteilig aufgebauten Filtergehäuse und einem darin aufgenommenen Filterelement (15), wobei das Filtergehäuse einen Filtersockel (6) zur Befestigung an einem weiteren Bauteil und eine Filteraufnahme (7) aufweist, in der das Filterelement (15) aufgenommen ist, und dass die Filteraufnahme (7) verstellbar am Filtersockel (6) gehalten ist,
**dadurch gekennzeichnet,**
**dass** die Filteraufnahme (7) zur Überführung zwischen einer unmittelbar am Filtersockel (6) gelegenen Funktionsposition und einer gegenüber dem Filtersockel (6) verstellbaren Wartungsposition translatorisch derart zu verschieben ist, dass sie in Kraftfahrzeugslängsrichtung nach vorne verschiebbar ist und in dieser Wartungsposition das in der Filteraufnahme 7 aufgenommene Filterelement durch Aufschrauben eines Schraubdeckels (16) aus der Filteraufnahme zu entnehmen ist.

2. Flüssigkeitsfilter nach Anspruch 1,
**dadurch gekennzeichnet,**
**dass** die Filteraufnahme (7) in eine Öffnung im Filtersockel (6) einsteckbar ist.

3. Flüssigkeitsfilter nach einem der Ansprüche 1 oder 2,
**dadurch gekennzeichnet,**
**dass** der Filtersockel (6) eine Zuströmöffnung (12) aufweist und in Funktionsposition ein Zuströmkanal (14) in der Filteraufnahme (7) mit der Zuströmöffnung (12) kommuniziert.

4. Flüssigkeitsfilter nach einem der Ansprüche 1 bis 3,
**dadurch gekennzeichnet,**
**dass** der Filtersockel (6) eine Abströmöffnung (20) aufweist und in Funktionsposition ein Abströmkanal (18) in der Filteraufnahme (7) mit der Abströmöffnung (20) kommuniziert.

5. Flüssigkeitsfilter nach einem der Ansprüche 1 bis 4,
**dadurch gekennzeichnet,**
**dass** eine mit dem Abströmkanal (18) kommunizierende Ablassöffnung (27) vorgesehen ist, die in Funktionsposition versperrt und in Wartungsposition geöffnet ist.

6. Flüssigkeitsfilter nach einem der Ansprüche 1 bis 5,
**dadurch gekennzeichnet,**
**dass** die Filteraufnahme (7) mittels eines in das Filtergehäuse integrierten Stellglieds zwischen Funktions- und Wartungsposition zu verstellen ist.

7. Flüssigkeitsfilter nach Anspruch 5 und 6,
**dadurch gekennzeichnet,**
**dass** das Stellglied in Funktionsposition die Ablassöffnung (27) versperrt und in Wartungsposition freigibt.

8. Flüssigkeitsfilter nach Anspruch 7,
**dadurch gekennzeichnet,**
**dass** in Wartungsposition der Abströmkanal (18) mit der Ablassöffnung (27) verbunden ist.

9. Flüssigkeitsfilter nach einem der Ansprüche 6 bis 8,
**dadurch gekennzeichnet,**
**dass** das Stellglied als Stellschraube (10) ausgeführt ist.

10. Flüssigkeitsfilter nach einem der Ansprüche 1 bis 9,
**dadurch gekennzeichnet,**
**dass** ein Drucksensor (28) zur Messung des Drucks im Abströmkanal (18) vorgesehen ist, wobei ein Fehlersignal für den Fall erzeugbar ist, dass der Druck im Abströmkanal (18) einen Grenzwert unterschreitet.

## Claims

1. Liquid filter, more especially an oil filter for motor vehicles, the said liquid filter having a filter housing that is designed in two parts and a filter element (15) that is accommodated in the said filter housing, wherein the filter housing includes a filter support (6) for securement to an additional component and a filter accommodating means (7) in which the filter element (15) is accommodated, and in that the filter accommodating means (7) is retained so as to be adjustable on the filter support (6), **characterised in that** the filter accommodating means (7), for transferring between an operating position that is placed directly at the filter support (6) and a service position that is adjustable opposite the filter support (6), can be displaced in a translatory manner such that the said filter accommodating means is displaceable forwards in the longitudinal direction of the motor vehicle and in this service position the filter element that is accommodated in the filter accommodating means (7) can be removed out of the said filter accommodating means by the unscrewing of a screw-type cover (16).

2. Liquid filter according to claim 1, **characterised in that** the filter accommodating means (7) is insertable into an opening in the filter support (6).

3. Liquid filter according to one of claims 1 or 2, **characterised in that** the filter support (6) includes an incoming flow opening (12) and in the operating position an incoming flow duct (14) in the filter accommodating means (7) communicates with the incoming flow opening (12).

4. Liquid filter according to one of claims 1 to 3, **characterised in that** the filter support (6) includes an outgoing flow opening (20) and in the operating position an outgoing flow duct (18) in the filter accommodating means (7) communicates with the outgoing flow opening (20).

5. Liquid filter according to one of claims 1 to 4, **characterised in that** there is provided a discharge opening (27) that communicates with the outgoing flow duct (18), the said discharge opening being blocked in the operating position and open in the service position.

6. Liquid filter according to one of claims 1 to 5, **characterised in that** the filter accommodating means (7) can be displaced between an operating position and a service position through the intermediary of a control member that is incorporated in the filter housing.

7. Liquid filter according to claim 5 and 6, **characterised in that** the control member blocks the discharge opening (27) in the operating position and releases it in the service position.

8. Liquid filter according to claim 7, **characterised in that** in the service position the outgoing flow duct (18) is connected to the discharge opening (27).

9. Liquid filter according to one of claims 6 to 8, **characterised in that** the control member is in the form of an adjusting screw (10).

10. Liquid filter according to one of claims 1 to 9, **characterised in that** a pressure sensor (28) is provided for measuring the pressure in the outgoing flow duct (18), wherein an error signal can be generated should the pressure in the outgoing flow duct (18) fall below a limit value.

## Revendications

1. Filtre à liquide, notamment filtre à huile pour véhicule automobile comportant un boîtier de filtre en deux parties et recevant un élément de filtre (15), le boîtier de filtre ayant un socle à filtre (6) pour sa fixation sur une autre pièce ainsi qu'un logement de filtre (7) qui reçoit l'élément de filtre (15) et ce logement de filtre (7) est monté de manière réglable sur le socle de filtre (6),
**caractérisé en ce que**
le logement de filtre (7) peut être coulissé en translation pour passer d'une position active située directement sur le socle de filtre (6) et une position d'entretien, réglable par rapport au socle de filtre (6), de façon à avancer dans la direction longitudinale du véhicule et permettre, dans cette position d'entretien, d'extraire l'élément de filtre logé dans le logement de filtre (7) en dévissant un couvercle vissé (16) du logement de filtre.

2. Filtre à liquide selon la revendication 1,
**caractérisé en ce que**
le logement de filtre (7) est engagé dans une ouverture du socle de filtre (6).

3. Filtre à liquide selon l'une des revendications 1 ou 2,
**caractérisé en ce que**
le socle de filtre (6) comporte un orifice d'alimentation (12) et, en position de fonctionnement, un canal d'alimentation (14) du logement de filtre (7) communique avec l'orifice d'alimentation (12).

4. Filtre à liquide selon l'une des revendications 1 à 3,
**caractérisé en ce que**
le socle de filtre (6) présente un orifice de sortie (20) et, en position de fonctionnement, un canal de sortie (18) du logement de filtre (7) communique avec l'orifice de sortie (20).

5. Filtre à liquide selon l'une des revendications 1 à 4,
**caractérisé par**
un orifice de sortie (27) communiquant avec le canal de sortie (18), cet orifice étant fermé en position active et ouvert en position d'entretien.

6. Filtre à liquide selon l'une des revendications 1 à 5,
**caractérisé en ce que**
le logement de filtre (7) est réglable entre une position active et une position d'entretien à l'aide d'un organe d'actionnement intégré au boîtier de filtre.

7. Filtre à liquide selon les revendications 5 et 6,
**caractérisé en ce que**
l'organe d'actionnement bloque l'orifice de sortie (27) en position active et libère cet orifice lorsqu'il est en position d'entretien.

8. Filtre à liquide selon la revendication 7,
**caractérisé en ce que** le canal de sortie (18) est relié à l'orifice de sortie (27) en position d'entretien.

9. Filtre à liquide selon l'une des revendications 6 à 8,
**caractérisé en ce que**
l'organe d'actionnement est réalisé sous la forme d'une vis d'actionnement(10.)

10. Filtre à liquide selon l'une des revendications 1 à 9,
**caractérisé par**
un capteur de pression (28) pour mesurer la pression dans le canal de sortie (18), un signal de défaut étant généré si la pression dans le canal de sortie (18) passe en dessous d'une valeur limite.
